(19) Europäisches Patentamt
European Patent Office
Office européen des brevets

(11)     **EP 2 630 453 B1**

## (12)     FASCICULE DE BREVET EUROPEEN

(45) Date de publication et mention
de la délivrance du brevet:
**26.11.2014   Bulletin 2014/48**

(51) Int Cl.:
***G01H 1/00*** *(2006.01)*

(21) Numéro de dépôt: **11787732.4**

(86) Numéro de dépôt international:
**PCT/FR2011/052465**

(22) Date de dépôt: **21.10.2011**

(87) Numéro de publication internationale:
**WO 2012/052694 (26.04.2012 Gazette 2012/17)**

(54) **PROCÉDÉ DE SURVEILLANCE D'UN ÉLÉMENT TOURNANT APPARTENANT À UNE TRANSMISSION MÉCANIQUE D'UN AÉROGÉNÉRATEUR**

VERFAHREN ZUR ÜBERWACHUNG EINES DREHBAREN ELEMENTS EINES MECHANISCHEN GETRIEBES EINER WINDENERGIEANLAGE

METHOD FOR MONITORING A ROTARY ELEMENT BELONGING TO A MECHANICAL TRANSMISSION OF A WIND TURBINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **21.10.2010   FR 1058617**

(43) Date de publication de la demande:
**28.08.2013   Bulletin 2013/35**

(73) Titulaires:
• **Maia Eolis**
**59777 Lille (FR)**
• **Institut National des Sciences Appliquées de Lyon**
**69621 Villeurbanne (FR)**

(72) Inventeurs:
• **ANDRE, Hugo**
**F-69001 Lyon (FR)**
• **REMOND, Didier**
**F-69740 Genas (FR)**

(74) Mandataire: **Chevalier, Renaud Philippe et al**
**Cabinet Germain & Maureau**
**BP 6153**
**69466 Lyon Cedex 06 (FR)**

(56) Documents cités:
**WO-A1-96/05486     US-A- 4 751 657**
**US-A- 5 365 787     US-B1- 6 729 186**

EP 2 630 453 B1

**Description**

La présente invention se rapporte à un procédé de surveillance d'un élément tournant appartenant à une transmission mécanique d'un aérogénérateur ainsi qu'à un système de surveillance d'un élément tournant appartenant à une transmission mécanique d'un aérogénérateur.

Par « élément tournant », on entend notamment :

- une ligne d'arbre de l'aérogénérateur,
- un roulement supportant une ligne d'arbre,
- un engrenage appartenant à un train d'engrenages d'un multiplicateur de l'aérogénérateur,
- une barre rotorique/statorique d'une génératrice de l'aérogénérateur.

La surveillance des éléments tournants a notamment pour objet de détecter les défauts de ces éléments tournants. La surveillance des éléments tournants est un enjeu important pour la gestion de la maintenance et de l'entretien d'un parc d'aérogénérateurs.

Il est connu de l'état de la technique de disposer des accéléromètres sur un carter de l'élément tournant à surveiller afin d'effectuer des acquisitions de mesures à pas de temps constant des vibrations émises par les défauts et transmises aux accéléromètres par voie solidienne à travers le carter. Les défauts de l'élément tournant à surveiller engendrent des excitations cycliques dont la fréquence d'apparition dépend directement de la vitesse angulaire de l'élément tournant. Par ailleurs, la voie solidienne filtrant ces défauts est influencée par de nombreux paramètres dont le couple exercé sur l'élément tournant.

US5365787 et WO9605486 décrivent des procédés de surveillance d'un élément tournant appartenant à une transmission mécanique d'une turbine. Ces procédés comportent des étapes pour déterminer un signal représentatif de la vitesse angulaire instantanée de l'élément tournant sur une durée d'acquisition et calculer la transformée de Fourier discrète du signal représentatif de la vitesse angulaire échantillonné de manière à obtenir un spectre d'ordre du signal représentatif de la vitesse angulaire.

Les acquisitions temporelles de mesure ne peuvent être effectuées que lorsque les conditions de fonctionnement de l'aérogénérateur sont stables ; en particulier la vitesse angulaire de l'élément tournant doit rester dans une fenêtre d'acquisition prédéterminée durant une durée d'acquisition suffisamment importante. La fenêtre d'acquisition est prédéterminée de sorte que :

- les excitations cycliques ne s'étendent pas sur une bande fréquentielle trop large, la largeur de la bande fréquentielle dépendant de la vitesse angulaire de l'élément tournant,
- la durée d'acquisition est suffisamment longue pour obtenir une estimation statistique fiable de l'évolution du défaut.

Il est à noter qu'il n'est pas possible de comparer les observations obtenues à partir de différentes fenêtres d'acquisition.

Ces conditions de stabilité du fonctionnement de l'aérogénérateur sont extrêmement contraignantes dans la mesure où, par nature, les conditions de fonctionnement d'un aérogénérateur sont dictées par le vent, et sont donc très difficilement contrôlables. En d'autres termes, les conditions de couple exercé sur l'élément tournant et de vitesse angulaire de l'élément tournant sont classiquement non stationnaires.

Par ailleurs, lorsque l'on souhaite surveiller le multiplicateur de l'aérogénérateur, les fréquences à surveiller sont nombreuses et éloignées les unes des autres.

Les acquisitions temporelles de mesures nécessitent alors :

- une fréquence d'échantillonnage élevée pour les excitations cycliques les plus rapides,
- une résolution fréquentielle élevée pour les excitations cycliques les plus lentes et pour différencier les excitations cycliques dont les fréquences d'apparition sont proches.

Le signal vibratoire obtenu à partir d'un accéléromètre est la convolution de l'excitation cyclique que peut produire l'élément tournant à surveiller par la fonction de transfert du carter. Or, la fonction de transfert du carter est très sensible aux conditions de montage. Par conséquent, l'observation d'un même défaut pour un même régime de fonctionnement de l'aérogénérateur peut différer de manière importante pour deux conditions de montage différentes du carter. De plus, le changement de conditions de vitesse angulaire de l'élément tournant implique un changement de la localisation de la fréquence d'apparition de l'excitation cyclique, et implique donc des modifications de niveaux mesurés par l'accéléromètre.

En outre, de telles acquisitions temporelles de mesures ne peuvent détecter les défauts apparaissant dans les régimes transitoires de l'aérogénérateur, par exemple lorsque l'aérogénérateur est en cours de démarrage ou en cours d'arrêt. En effet, comme précisé précédemment, les acquisitions temporelles de mesures doivent être effectuées lorsque les conditions de fonctionnement de l'aérogénérateur sont stables, les régimes transitoires étant par nature instables.

De plus, l'amortissement de la voie solidienne transmettant l'excitation cyclique à l'accéléromètre ne permet pas de surveiller l'ensemble d'une ligne d'arbre avec un seul accéléromètre. En particulier, il est courant d'utiliser une dizaine d'accéléromètres pour surveiller une ligne d'arbre complète, ce qui engendre des coûts élevés d'entretien et des difficultés de gestion des signaux à stocker et à traiter.

La présente invention vise à remédier en tout ou partie aux inconvénients précités et concerne un procédé de surveillance d'un élément tournant appartenant à une transmission mécanique d'un aérogénérateur, le procédé étant remarquable en ce qu'il comporte les étapes consistant à :

- a) déterminer un signal représentatif de la vitesse angulaire instantanée de l'élément tournant sur une durée d'acquisition,
- b) échantillonner le signal représentatif de la vitesse angulaire instantanée à un pas angulaire constant sur un nombre d'échantillons déterminé,
- c) calculer la transformée de Fourier discrète du signal représentatif de la vitesse angulaire échantillonné lors de l'étape b) de manière à obtenir un spectre d'ordre du signal représentatif de la vitesse angulaire,
- d) détecter la fréquence fondamentale d'apparition d'un défaut de l'élément tournant sur le spectre d'ordre du signal représentatif de la vitesse angulaire.

[0015] - Ainsi, un tel procédé de surveillance permet de détecter un défaut de l'élément tournant, à partir de sa fréquence d'apparition dite fréquence caractéristique, sur le spectre d'ordre du signal représentatif de la vitesse angulaire.

La fréquence caractéristique du défaut est obtenue classiquement par une analyse préalable, notamment par une analyse géométrique de l'élément tournant.

Un tel procédé de surveillance permet de détecter la fréquence fondamentale d'apparition sur le spectre d'ordre au voisinage de la fréquence caractéristique au sens où la fréquence fondamentale d'apparition peut être différente de la fréquence caractéristique.

La surveillance est alors aisément obtenue, par exemple par un suivi de l'amplitude du spectre d'ordre pour la fréquence fondamentale d'apparition.

Un tel procédé de surveillance utilise un signal représentatif de la vitesse angulaire instantanée échantillonné à pas d'angle constant, ce qui permet de détecter un défaut pour des conditions de couple exercé sur l'élément tournant et de vitesse angulaire de l'élément tournant qui sont non stationnaires ainsi que pour des régimes transitoires de l'aérogénérateur, ce qui est impossible avec une surveillance vibratoire utilisant des accéléromètres et des systèmes d'acquisition temporelle classiques.

Selon un mode de mise en oeuvre, le spectre d'ordre du signal de vitesse angulaire présente une composante fréquentielle du type large bande, et les moyens de calcul sont configurés pour appliquer un fenêtrage (w(i)) au signal représentatif de la vitesse angulaire échantillonné ($\omega$(i)), le fenêtrage étant configuré pour retirer la composante fréquentielle du type large bande.

Ainsi, lorsque la vitesse angulaire de l'élément tournant présente une variation macroscopique temporelle, cette variation macroscopique engendre une composante fréquentielle du type large bande sur le spectre d'ordre. Ainsi, un tel procédé de surveillance permet de détecter précisément un défaut de l'élément tournant malgré une variation macroscopique temporelle de la vitesse angulaire de l'élément tournant.

Selon un mode de mise en oeuvre, l'étape b) comporte les étapes consistant à :

- calculer la valeur moyenne du signal représentatif de la vitesse angulaire instantanée déterminé lors de l'étape a) sur la durée d'acquisition,
- compléter le signal représentatif de la vitesse angulaire instantanée déterminé lors de l'étape a) avec un nombre de points présentant chacun une valeur sensiblement égale à ladite valeur moyenne calculée du signal représentatif de la vitesse angulaire instantanée, le nombre de points étant déterminé de sorte que le nombre d'échantillons définit un intervalle de temps multiple de la période fondamentale d'apparition du défaut.

Ainsi, un tel procédé de surveillance permet de s'affranchir de l'effet dénommé en langue anglaise « *Picket Fence Effect* » pour la transformée de Fourier discrète du signal représentatif de la vitesse angulaire échantillonné lorsque la vitesse angulaire de l'élément tournant est macroscopiquement stable.

Avantageusement, le procédé de surveillance comporte en outre les étapes consistant a :

- mesurer la valeur moyenne d'un signal de vitesse angulaire instantanée sur la durée d'acquisition,
- mesurer la valeur moyenne du couple exercé sur l'élément tournant sur la durée d'acquisition,
- normaliser le signal représentatif de la vitesse angulaire instantanée déterminé lors de l'étape a) relativement à un signal représentatif de la vitesse angulaire de référence.

Ainsi, il est possible de comparer, pour des conditions similaires de valeur moyenne de couple exercé sur l'élément tournant et de valeur moyenne de vitesse angulaire de l'élément tournant, le signal représentatif de la vitesse angulaire instantanée relativement à un signal représentatif de la vitesse angulaire de référence, le signal représentatif de la vitesse angulaire de référence correspondant à un élément tournant dénué de défaut. Un tel procédé peut alors permettre d'estimer la durée de vie de l'élément tournant.

Selon une variante d'exécution, le procédé de surveillance comporte en outre les étapes consistant à :

- mesurer la valeur moyenne du couple exercé sur la durée d'acquisition,
- attribuer au moins un indicateur à la fréquence fondamentale d'apparition détectée lors de l'étape d) sur la durée d'acquisition, l'indicateur correspondant de préférence à l'amplitude du spectre d'ordre obtenu lors de l'étape c) pour la fréquence fondamentale d'apparition ou à une combinaison linéaire des amplitudes dudit spectre d'ordre pour les harmoniques de la fréquence fondamentale d'apparition,
- normaliser les indicateurs obtenus sur la durée d'acquisition relativement à un indicateur de référence.

Ainsi, il est possible de comparer, pour des conditions similaires de valeur moyenne de couple exercé sur l'élément tournant et de valeur moyenne de vitesse angulaire de l'élément tournant, les indicateurs relativement à un indicateur de référence, l'indicateur de référence correspondant à un élément tournant dénué de défaut. Un tel procédé peut alors permettre d'estimer la durée de vie de l'élément tournant. Il est à noter que la fréquence fondamentale d'apparition peut être modulée lors de l'étape d'attribution d'un indicateur.

Avantageusement, le signal représentatif de la vitesse angulaire instantanée déterminé lors de l'étape a) présente une fréquence maximale, l'étape b) comporte une étape consistant à choisir une fréquence d'échantillonnage inférieure au double de ladite fréquence maximale, et l'étape d) comporte une étape consistant à détecter la fréquence d'ordre fondamentale d'apparition d'un défaut de l'élément tournant sur une zone de repliement du spectre d'ordre du signal représentatif de la vitesse angulaire obtenu lors de l'étape c).

Ainsi, un tel procédé de surveillance permet de détecter une fréquence d'ordre fondamentale d'apparition d'un défaut de l'élément tournant supérieure à la fréquence de Shannon.

Selon une forme d'exécution, le signal représentatif de la vitesse angulaire instantanée déterminé lors de l'étape a) est un signal accélérométrique échantillonné à pas de temps constant, l'étape a) comportant une étape consistant à monter un accéléromètre sur un carter de l'élément tournant.

Ainsi, le rééchantillonnage angulaire à pas angulaire constant du signal accélérométrique permet de s'affranchir des perturbations liées à l'influence des variations de vitesse angulaire de l'élément tournant, tel qu'une ligne d'arbre de l'aérogénérateur.

Préférentiellement, l'étape b) comporte une étape consistant à interpoler le signal accélérométrique.

Selon une variante d'exécution, le signal représentatif de la vitesse angulaire instantanée déterminé lors de l'étape a) est un signal de vitesse angulaire instantanée.

Ainsi, un tel procédé de surveillance permet de s'affranchir de l'influence comportementale d'un carter de l'élément tournant.

Avantageusement, l'étape a) et l'étape b) comportent les étapes consistant à :

- monter un tachymètre sur l'élément tournant, le tachymètre délivrant une série d'impulsions représentative de la position angulaire instantanée de l'élément tournant,

- mesurer les intervalles de temps entre deux fronts montants, notamment successifs, de la série d'impulsions par l'intermédiaire d'un premier compteur haute fréquence présentant une horloge haute fréquence.

Ainsi, la mesure des intervalles de temps entre deux fronts montants, notamment successifs, de la série d'impulsions permet de déterminer la vitesse angulaire instantanée et d'obtenir un échantillonnage selon un pas d'angle constant.

Avantageusement, le procédé de surveillance comporte une étape consistant à soustraire deux intervalles de temps successifs mesurés entre deux fronts montants sur la durée d'acquisition de manière à obtenir un signal représentatif de l'accélération angulaire instantanée.

Ainsi, un tel signal représentatif de l'accélération angulaire instantanée permet de s'affranchir de la perturbation liée à la présence d'une composante fréquentielle du type large bande qui perturbe la détection de la fréquence fondamentale d'apparition du défaut à partir du spectre d'ordre du signal de vitesse angulaire instantanée.

Selon une variante d'exécution, le procédé de surveillance comporte les étapes consistant à :

- sommer les intervalles de temps mesurés entre deux fronts montants sur la durée d'acquisition de manière à obtenir un signal dit signal somme,
- interpoler le signal somme, de préférence par interpolation spline cubique, de manière à obtenir une fonction angle-temps, la fonction angle-temps associant chaque position angulaire instantanée de l'élément tournant à un pas de temps, les pas de temps correspondant aux franchissements de chaque front montant sur la durée d'acquisition,
- échantillonner ladite position angulaire à pas de temps constant,
- effectuer une double dérivation temporelle de la fonction angle-temps de manière à obtenir un signal d'accélération angulaire instantanée,
- filtrer ledit signal d'accélération angulaire instantanée sur une bande fréquentielle prédéterminée.

Ainsi, un tel procédé permet également de s'affranchir de la perturbation liée à la présence d'une composante fréquentielle du type large bande qui perturbe la détection de la fréquence fondamentale d'apparition du défaut en filtrant le signal d'accélération angulaire instantanée sur cette bande fréquentielle. Le module au carré de ce signal angulaire instantanée filtré est appelé enveloppe.

Le rééchantillonnage dans le domaine angulaire de l'enveloppe puis le calcul de sa transformée de Fourier permettent d'obtenir l'enveloppe spectrale angulaire qui est analysée comme un signal de vitesse instantanée de l'élément tournant.

Selon un mode de mise en oeuvre, l'étape a) et l'étape b) comportent une étape consistant à mesurer les intervalles de temps entre un premier front montant et un deuxième front montant par l'intermédiaire d'un second compteur haute fréquence, le deuxième front montant étant séparé du premier front montant par au moins un front montant intermédiaire, le second compteur étant de préférence relié à l'horloge haute fréquence du premier compteur.

Ainsi, il est possible de simuler la réduction de la résolution angulaire du tachymètre, la résolution angulaire du tachymètre étant inversement proportionnelle au nombre de fronts montants intermédiaires. Un tel procédé de surveillance permet de n'utiliser qu'un seul tachymètre pour synchroniser une ligne d'arbre entière de l'aérogénérateur avec une résolution angulaire équivalente. Le premier compteur et le second compteur reliés à la même horloge haute fréquence permettent une mise en oeuvre aisée par exemple à l'aide d'une seule carte de comptage.

La présente invention se rapporte également à un système de surveillance d'un élément tournant appartenant à une transmission mécanique d'un aérogénérateur, le système de surveillance étant remarquable en ce qu'il comporte :

- des moyens de détermination agencés pour déterminer un signal représentatif de la vitesse angulaire instantanée de l'élément tournant sur une durée d'acquisition,
- des moyens d'échantillonnage configurés pour échantillonner le signal représentatif de la vitesse angulaire à un pas angulaire constant sur un nombre d'échantillons déterminé,
- des moyens de calcul configurés pour calculer la transformée de Fourier discrète du signal représentatif de la vitesse angulaire échantillonné de manière à obtenir un spectre d'ordre du signal représentatif de la vitesse angulaire,
- des moyens de détection agencés pour détecter la fréquence fondamentale d'apparition d'un défaut de l'élément tournant sur le spectre d'ordre du signal représentatif de la vitesse angulaire.

Dans un mode de réalisation, le spectre d'ordre du signal de vitesse angulaire présente une composante fréquentielle du type large bande, et les moyens de calcul sont configurés pour appliquer un fenêtrage (w(i)) au signal représentatif de la vitesse angulaire échantillonné (ω(i)), le fenêtrage étant configuré pour retirer la composante fréquentielle du type large bande.

Dans un mode de réalisation, les moyens d'échantillonnage sont configurés pour :

- calculer la valeur moyenne du signal représentatif de la vitesse angulaire instantanée sur la durée d'acquisition,
- compléter le signal représentatif de la vitesse angulaire instantanée avec un nombre de points présentant chacun une valeur sensiblement égale à ladite valeur moyenne calculée, le nombre de points étant déterminé de sorte que le nombre d'échantillons définit un intervalle de temps multiple de la période fondamentale d'apparition du défaut.

Dans un mode de réalisation, le système de surveillance comporte en outre :

- des moyens de mesure de la valeur moyenne d'un signal de vitesse angulaire instantanée sur la durée d'acquisition,
- des moyens de mesure de la valeur moyenne du couple exercé sur l'élément tournant sur la durée d'acquisition,
- des moyens de normalisation du signal représentatif de la vitesse angulaire instantanée relativement à un signal représentatif de la vitesse angulaire de référence.

Dans un mode de réalisation, le système de surveillance comporte en outre :

- des moyens de mesure de la valeur moyenne d'un signal de vitesse angulaire instantanée (ω) sur la durée d'acquisition,
- des moyens de mesure de la valeur moyenne du couple exercé sur l'élément tournant sur la durée d'acquisition,
- des moyens pour attribuer au moins un indicateur à la fréquence fondamentale d'apparition détectée sur la durée d'acquisition, l'indicateur correspondant de préférence à l'amplitude du spectre d'ordre pour la fréquence fondamentale d'apparition ou à une combinaison linéaire des amplitudes dudit spectre d'ordre pour les harmoniques de la fréquence fondamentale d'apparition,
- des moyens de normalisation des indicateurs obtenus sur la durée d'acquisition relativement à un indicateur de référence.

Il est à noter que la fréquence fondamentale d'apparition peut être modulée lors de l'attribution d'un indicateur.

Dans un mode de réalisation, le signal représentatif de la vitesse angulaire instantanée présente une fréquence maximale, les moyens d'échantillonnage sont configurés pour choisir une fréquence d'échantillonnage inférieure au double de ladite fréquence maximale, et les moyens de détection sont configurés pour détecter la fréquence d'ordre fondamentale d'apparition du défaut de l'élément tournant sur une zone de repliement du spectre d'ordre du signal représentatif de la vitesse angulaire.

Selon une forme d'exécution, les moyens de détermination comportent :

- un tachymètre monté sur l'élément tournant, le tachymètre délivrant une série d'impulsions représentative de la position angulaire instantanée de l'élément tournant,
- un premier compteur haute fréquence agencé pour mesurer les intervalles de temps entre deux fronts montants, notamment successifs, de la série d'impulsions, le premier compteur formant les moyens d'échantillonnage, le premier compteur présentant une horloge haute fréquence.

Dans un mode de réalisation, les moyens de calcul sont configurés pour:

- sommer les intervalles de temps mesurés entre deux fronts montants sur la durée d'acquisition de manière à obtenir un signal dit signal somme,
- interpoler le signal somme, de préférence par interpolation spline cubique, de manière à obtenir une fonction angle-temps, la fonction angle-temps associant chaque position angulaire instantanée de l'élément tournant à un pas de temps, les pas de temps correspondant aux franchissements de chaque front montant sur la durée d'acquisition,
- échantillonner ladite position angulaire à pas de temps constant,
- effectuer une double dérivation temporelle de la fonction angle-temps de manière à obtenir un signal d'accélération angulaire instantanée,
- filtrer ledit signal d'accélération angulaire instantanée sur une bande fréquentielle prédéterminée.

Avantageusement, les moyens de détermination comportent un second compteur haute fréquence agencé pour mesurer les intervalles de temps entre un premier front montant et un deuxième front montant, le deuxième front montant étant séparé du premier front montant par au moins un front montant intermédiaire, le second compteur étant de préférence relié à l'horloge haute fréquence du premier compteur.

Dans un mode de réalisation, l'élément tournant présente un carter, et les moyens de détermination comportent au moins un accéléromètre monté sur le carter.

D'autres caractéristiques et avantages apparaîtront dans la description qui va suivre d'un mode de mise en oeuvre d'un procédé de surveillance d'un élément tournant appartenant à une transmission mécanique d'un aérogénérateur selon l'invention, donné à titre d'exemple non limitatif, en référence aux dessins annexés dans lesquels :

- la figure 1 est un graphique représentant un signal de vitesse angulaire instantanée (en tours par minute) de l'élément tournant sur une durée d'acquisition (en nombre de révolutions d'un tachymètre),
- la figure 2 est un graphique représentant la transformée de Fourier discrète (en tour par minute) du signal de vitesse angulaire illustré à la figure 1 échantillonné à un pas angulaire constant en fonction de la fréquence d'ordre (en événement par révolution du tachymètre),
- la figure 3 est un graphique représentant le signal de vitesse angulaire instantanée illustré à la figure 1 après fenêtrage,
- la figure 4 est un graphique représentant la transformée de Fourier discrète du signal de vitesse angulaire illustré à la figure 3.
- la figure 5 est une vue de dessous d'un organe de fixation d'un tachymètre sur un arbre de l'aérogénérateur,
- la figure 6 est une vue de face de l'organe illustré à la figure 5.

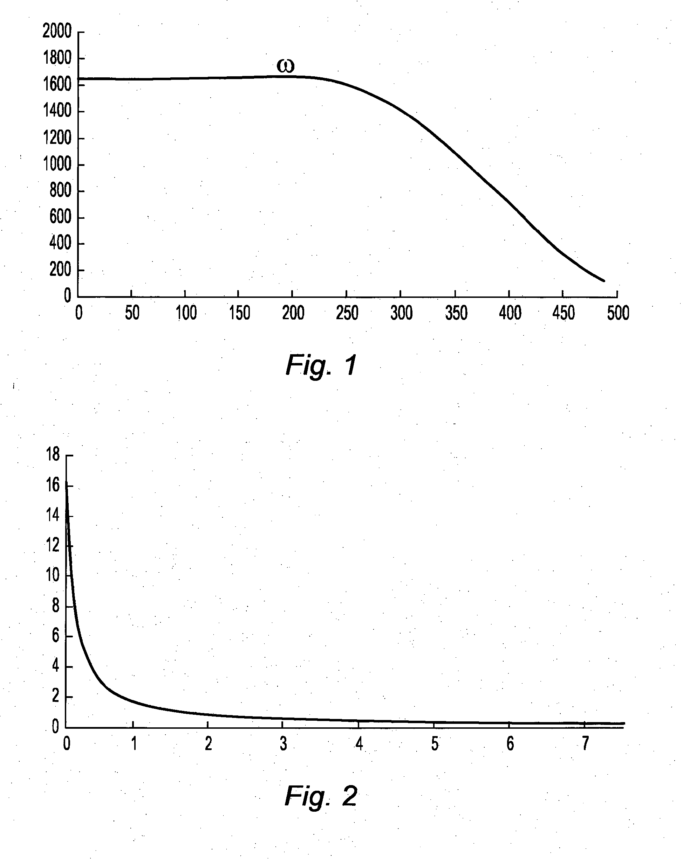

Le procédé de surveillance illustré aux figures 1 à 4 comporte les étapes consistant à :

- a) déterminer un signal de vitesse angulaire instantanée, noté ω, de l'élément tournant sur une durée d'acquisition (illustré à la figure 1),
- b) échantillonner, le signal de vitesse angulaire ω à un pas angulaire constant sur un nombre d'échantillons déterminé, le signal de vitesse angulaire échantillonné au $i^{ème}$ pas d'angle étant noté ω(i),
- c) calculer la transformée de Fourier discrète du signal de vitesse angulaire échantillonné lors de l'étape b), de manière à obtenir un spectre d'ordre du signal de vitesse angulaire ω(i),
- d) détecter la fréquence fondamentale d'apparition d'un défaut de l'élément tournant sur le spectre d'ordre du signal de vitesse angulaire ω(i).

L'étape a) et l'étape b) comportent les étapes consistant à :

- monter un tachymètre sur l'élément tournant, le tachymètre délivrant une série d'impulsions représentative de la position angulaire instantanée ω de l'élément tournant,
- mesurer les intervalles de temps entre deux fronts montants successifs de la série d'impulsions, notés Δt(i), par l'intermédiaire d'un compteur haute fréquence.

Le tachymètre présente une résolution fréquentielle notée R. Le compteur haute fréquence délivre un signal d'horloge présentant une fréquence notée $F_H$.
Le signal de vitesse angulaire échantillonné ω(i) est déterminé selon l'équation suivante :

$$\omega(i) = \frac{2\pi}{R}\frac{F_H}{\Delta t(i)}$$

Le spectre d'ordre obtenu lors de l'étape c) présente une composante fréquentielle du type large bande (illustré à la figure 2), et l'étape c) comporte une étape consistant à appliquer un fenêtrage noté w(i), de préférence de type Hanning, au signal de vitesse angulaire échantillonné ω(i) lors de l'étape b), le fenêtrage étant configuré pour retirer la composante fréquentielle du type large bande.

A cet effet, considérons le signal de vitesse angulaire échantillonné ω(i) sur un intervalle de temps [a : b].

L'étape consistant à appliquer un fenêtrage comporte une étape préalable consistant à retirer la valeur moyenne du signal de vitesse angulaire échantillonné w(i). Le signal obtenu, noté $\omega_0(i)$ vérifie l'équation suivante :

$$\omega_0(i) = \omega(i) - \frac{1}{b-a}\int_a^b \omega(i)$$

On applique alors le fenêtrage w(i). Le signal obtenu, noté $\omega_{0fen}(i)$, vérifie l'équation suivante :

$$\omega_{0fen}(i) = \omega_0(i).\,w(i)$$

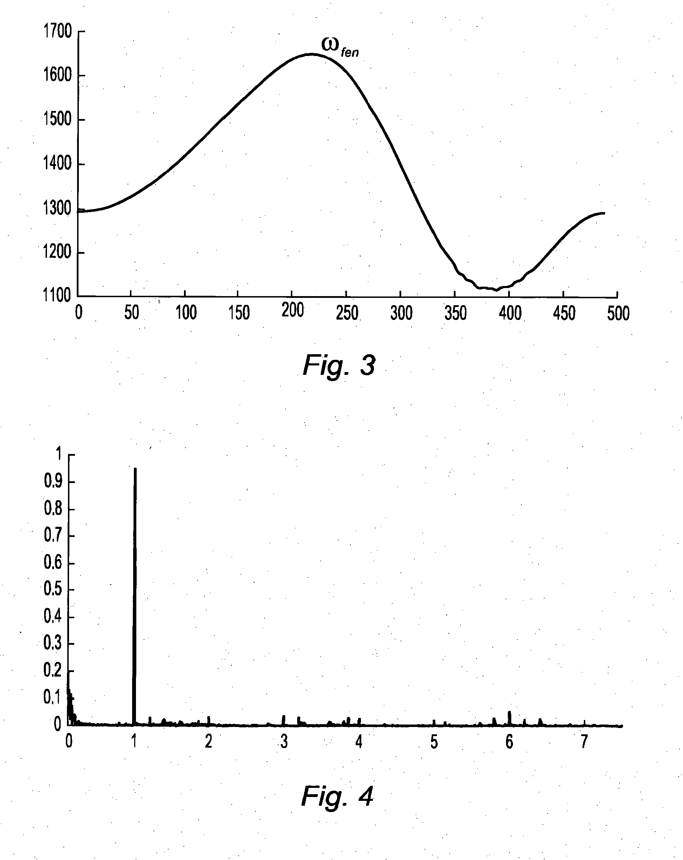

Puis on réinjecte la valeur moyenne du signal. Le signal obtenu, noté $\omega_{fen}(i)$ (illustré à la figure 3), vérifie l'équation suivante :

$$\omega_{fen}(i) = \omega_{0fen}(i) + \omega(i) - \omega_0(i)$$

Le procédé de surveillance illustré aux figures 1 à 4 peut comporter en outre les étapes consistant à :

- mesurer la valeur moyenne du couple exercé sur la durée d'acquisition,
- attribuer au moins un indicateur à la fréquence fondamentale d'apparition détectée lors de l'étape d) sur la durée d'acquisition, l'indicateur correspondant de préférence à l'amplitude du spectre d'ordre obtenu lors de l'étape c) pour la fréquence fondamentale d'apparition ou à une combinaison linéaire des amplitudes dudit spectre d'ordre pour les harmoniques de la fréquence fondamentale d'apparition,
- normaliser les indicateurs obtenus sur la durée d'acquisition relativement à un indicateur de référence.

Plus précisément, on considère N signaux représentatifs de la vitesse instantanée ω de l'élément tournant sur la durée d'acquisition. Pour chacun desdits N signaux, un indicateur noté x(n), n étant un entier, est attribué. L'indicateur x(n) correspond au défaut surveillé. Bien entendu, si plusieurs défauts sont à surveiller, on attribue alors plusieurs indicateurs, chacun d'entre eux correspondant à un défaut à surveiller. Il est également possible d'attribuer plusieurs indicateurs pour un même défaut surveillé. Pour chaque signal x(n), on mesure la valeur moyenne du signal de vitesse angulaire instantanée ω et la valeur moyenne du couple. Il est également possible d'utiliser des estimateurs statistiques (variance, Kurtosis) obtenus à partir d'autres types de signaux tels que l'accélération ou la vitesse du vent pour paramétrer la normalisation. On parle donc d'estimateur statistique du paramètre de normalisation, cet estimateur statistique étant noté v(n), en référence à la vitesse moyenne du signal de vitesse angulaire instantanée ω.

Par conséquent, par « paramètre de normalisation », on entend indifféremment :

- la vitesse de rotation instantanée ω de l'élément tournant,
- le couple exercé sur l'élément tournant,
- la puissance produite par l'aérogénérateur,
- l'accélération angulaire instantanée de l'élément tournant,
- la vitesse du vent.

En outre, par « estimateur statistique », on entend notamment indifféremment un estimateur :

- de la moyenne,
- de la variance.

Parmi les N signaux, on différencie les $N_1$ premiers signaux qui permettent d'établir le comportement de référence des $N_2$ signaux suivants qui seront normalisés ($N=N_1+N_2$).

Par « normalisés », on entend centrés et/ou réduits tenant compte respectivement de leur valeur moyenne et de leur écart-type.

Les $N_1$ signaux ont été enregistrés avant les N2 signaux. Les indicateurs x(n), $n \le N_1$, sont tracés en fonction de v(n). Une méthode de régression ou d'interpolation permet d'estimer l'amplitude moyenne de l'indicateur en fonction de la vitesse moyenne du signal de vitesse angulaire instantanée ω qui a permis de l'obtenir. Une régression linéaire ou une estimation linéaire par morceaux peuvent être utilisées pour estimer la fonction de référence x(v) à partir des $N_1$ indicateurs. Pour l'estimation linéaire par morceaux, l'intervalle balayé par l'estimateur statistique du paramètre de normalisation v(n), ledit intervalle étant noté I, est découpé en sous-intervalles complémentaires de dimension fixée (pas nécessairement constante), les sous-intervalles étant notés $I_1$, $I_2$, ..., $I_i$. Ces sous-intervalles vérifient les relations suivantes :

$$I_1 \cup I_2 \cup ... \cup I_i = I$$

$$\forall a, b \ \in [1, i], I_a \cap I_b = \emptyset$$

Les $N_1$ points sont répartis entre les différents sous-intervalles. Pour chaque sous-intervalle, on calcule la valeur moyenne des indicateurs ainsi que la valeur moyenne de l'estimateur statistique du paramètre de normalisation v(n) pour obtenir les coordonnées de points formant l'estimation linéaire par morceaux dite de référence.

Il est également possible de calculer plusieurs estimateurs statistiques des indicateurs tels que la valeur moyenne et la variance, ainsi que la valeur moyenne de l'estimateur statistique du paramètre de normalisation v(n) pour obtenir les coordonnées des points formant les estimations linéaires par morceaux dite de référence. Ces estimations de référence génèrent les fonctions de référence x(v) par interpolation linéaire.

Les estimations des fonctions de référence $x_1(v)$ et $x_2(v)$ sont des fonctions qui associent respectivement valeur moyenne et variance empirique à l'estimateur statistique du paramètre de normalisation v(n). L'estimateur statistique du paramètre de normalisation v(n) des $N_1$ signaux permet de normaliser l'indicateur des $N_2$ signaux avec la valeur moyenne de l'indicateur estimé à partir des fonctions de référence $x_1(v)$ et $x_2(v)$. On rappelle qu'il est entendu par « normaliser » l'opération consistant à centrer et/ou réduire l'indicateur.

Si l'on note $x_{norm}$ l'indicateur normalisé, la relation suivante est vérifiée :

$$x_{norm}(n) = \frac{x(n) - x_1(v(n))}{x_2(v(n))}$$

Les indicateurs normalisés sont ensuite observés chronologiquement pour permettre la surveillance de l'élément tournant en condition de fonctionnement, par exemple via un histogramme. Des seuils peuvent être mis en place pour mettre en évidence l'évolution d'un défaut ou l'apparition d'un défaut.

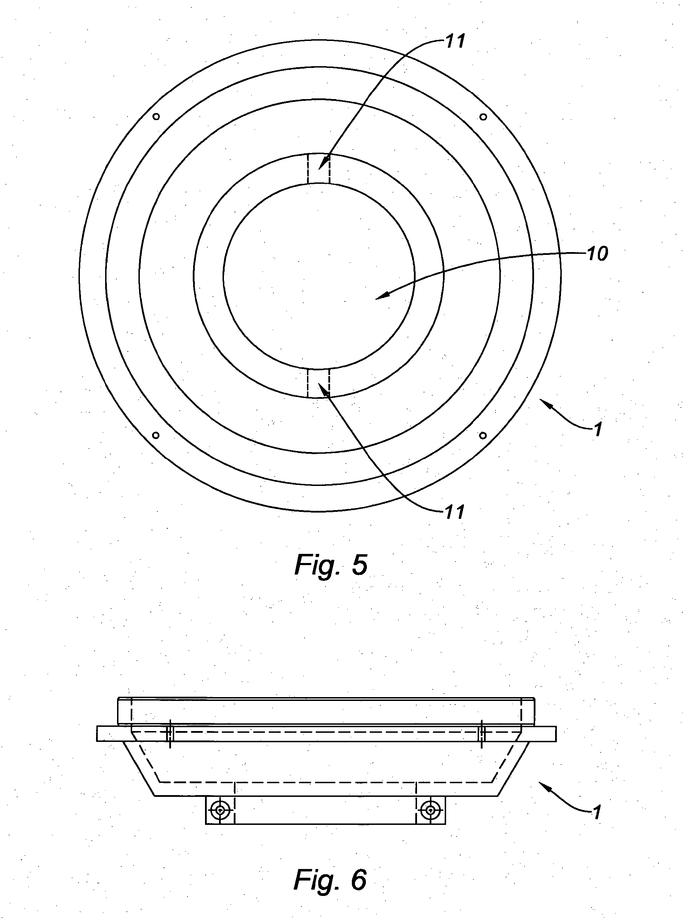

Aux figures 5 et 6 est illustré un organe de fixation 1 d'un codeur formant tachymètre sur un arbre de l'aérogénérateur, la géométrie de l'arbre n'étant pas préalablement connue.

A cet effet, l'organe de fixation 1 présente un alésage central 10 conformé pour recevoir l'arbre, l'alésage 10 étant surdimensionné.

L'organe de fixation 1 comporte des orifices taraudés 11, chaque orifice taraudé 11 étant conformé pour recevoir une vis d'appui sans tête. De telles vis sont destinées à bloquer l'organe de fixation 1 sur l'arbre afin d'éviter notamment un glissement en rotation conduisant à une mauvaise lecture angulaire du codeur ou d'éviter un glissement axial conduisant à une tête de lecture du codeur hors du champ de lecture du codeur.

L'organe de fixation 1 est usiné dans un cylindre plein puis coupé en deux pour permettre son assemblage autour dudit arbre de l'aérogénérateur.

Bien entendu, le mode de mise en oeuvre de l'invention décrit ci-dessus ne présente aucun caractère limitatif. Des détails et améliorations peuvent y être apportés dans d'autres variantes d'exécution sans pour autant sortir du cadre de l'invention.

**Revendications**

1. Procédé de surveillance d'un élément tournant appartenant à une transmission mécanique d'un aérogénérateur, le procédé étant **caractérisé en ce qu'**il comporte les étapes consistant à :

    - a) déterminer un signal représentatif de la vitesse angulaire instantanée (ω) de l'élément tournant sur une durée d'acquisition,
    - b) échantillonner le signal représentatif de la vitesse angulaire instantanée (ω) à un pas angulaire constant sur un nombre d'échantillons déterminé,
    - c) calculer la transformée de Fourier discrète du signal représentatif de la vitesse angulaire échantillonné (ω(i)) lors de l'étape b) de manière à obtenir un spectre d'ordre du signal représentatif de la vitesse angulaire,
    - d) détecter la fréquence fondamentale d'apparition d'un défaut de l'élément tournant sur le spectre d'ordre du signal représentatif de la vitesse angulaire.

2. Procédé de surveillance selon la revendication 1, **caractérisé en ce que** le spectre d'ordre du signal de vitesse angulaire présente une composante fréquentielle du type large bande, et **en ce que** les moyens de calcul sont configurés pour appliquer un fenêtrage (w(i)) au signal représentatif de la vitesse angulaire échantillonné (ω(i)), le fenêtrage étant configuré pour retirer la composante fréquentielle du type large bande.

3. Procédé de surveillance selon la revendication 1 ou 2, **caractérisé en ce que** l'étape b) comporte les étapes consistant à :

    - calculer la valeur moyenne du signal représentatif de la vitesse angulaire instantanée (ω) déterminé lors de l'étape a) sur la durée d'acquisition,
    - compléter le signal représentatif de la vitesse angulaire instantanée (ω) déterminé lors de l'étape a) avec un nombre de points présentant chacun une valeur sensiblement égale à ladite valeur moyenne calculée du signal représentatif de la vitesse angulaire instantanée (ω), le nombre de points étant déterminé de sorte que le nombre d'échantillons définit un intervalle de temps multiple de la période fondamentale d'apparition du défaut.

4. Procédé de surveillance selon l'une des revendications 1 à 3, **caractérisé en ce qu'**il comporte en outre les étapes consistant à :

  - mesurer la valeur moyenne d'un signal de vitesse angulaire instantanée ($\omega$) sur la durée d'acquisition,
  - mesurer la valeur moyenne du couple exercé sur l'élément tournant sur la durée d'acquisition,
  - normaliser le signal représentatif de la vitesse angulaire instantanée ($\omega$) déterminé lors de l'étape a) relativement à un signal représentatif de la vitesse angulaire de référence.

5. Procédé de surveillance selon l'une des revendications 1 à 3, **caractérisé en ce qu'**il comporte en outre les étapes consistant à :

  - mesurer la valeur moyenne du couple exercé sur la durée d'acquisition,
  - attribuer au moins un indicateur à la fréquence fondamentale d'apparition détectée lors de l'étape d) sur la durée d'acquisition, l'indicateur correspondant de préférence à l'amplitude du spectre d'ordre obtenu lors de l'étape c) pour la fréquence fondamentale d'apparition ou à une combinaison linéaire des amplitudes dudit spectre d'ordre pour les harmoniques de la fréquence fondamentale d'apparition,
  - normaliser les indicateurs obtenus sur la durée d'acquisition relativement à un indicateur de référence.

6. Procédé de surveillance selon l'une des revendications 1 à 5, **caractérisé en ce que** le signal représentatif de la vitesse angulaire instantanée ($\omega$) déterminé lors de l'étape a) présente une fréquence maximale, **en ce que** l'étape b) comporte une étape consistant à choisir une fréquence d'échantillonnage inférieure au double de ladite fréquence maximale, et **en ce que** l'étape d) comporte une étape consistant à détecter la fréquence d'ordre fondamentale d'apparition d'un défaut de l'élément tournant sur une zone de repliement du spectre d'ordre du signal représentatif de la vitesse angulaire obtenu lors de l'étape c).

7. Procédé de surveillance selon l'une des revendications 1 à 6, **caractérisé en ce que** le signal représentatif de la vitesse angulaire instantanée ($\omega$) déterminé lors de l'étape a) est un signal accélérométrique échantillonné à pas de temps constant, l'étape a) comportant une étape consistant à monter un accéléromètre sur un carter de l'élément tournant.

8. Procédé de surveillance selon la revendication 7, **caractérisé en ce que** l'étape b) comporte une étape consistant à interpoler le signal accélérométrique.

9. Procédé de surveillance selon l'une des revendications 1 à 6, **caractérisé en ce que** le signal représentatif de la vitesse angulaire instantanée ($\omega$) déterminé lors de l'étape a) est un signal de vitesse angulaire instantanée ($\omega$).

10. Procédé de surveillance selon la revendication 9, **caractérisé en ce que** l'étape a) et l'étape b) comportent les étapes consistant à :

  - monter un tachymètre sur l'élément tournant, le tachymètre délivrant une série d'impulsions représentative de la position angulaire instantanée ($\omega$) de l'élément tournant,
  - mesurer les intervalles de temps entre deux fronts montants, notamment successifs, de la série d'impulsions par l'intermédiaire d'un premier compteur haute fréquence présentant une horloge haute fréquence.

11. Procédé de surveillance selon la revendication 10, **caractérisé en ce qu'**il comporte une étape consistant à soustraire deux intervalles de temps successifs mesurés entre deux fronts montants sur la durée d'acquisition de manière à obtenir un signal représentatif de l'accélération angulaire instantanée.

12. Procédé de surveillance selon la revendication 10, **caractérisé en ce qu'**il comporte les étapes consistant à :

  - sommer les intervalles de temps mesurés entre deux fronts montants sur la durée d'acquisition de manière à obtenir un signal dit signal somme,
  - interpoler le signal somme, de préférence par interpolation spline cubique, de manière à obtenir une fonction angle-temps, la fonction angle-temps associant chaque position angulaire instantanée de l'élément tournant à un pas de temps, les pas de temps correspondant aux franchissements de chaque front montant sur la durée d'acquisition,
  - échantillonner ladite position angulaire à pas de temps constant,
  - effectuer une double dérivation temporelle de la fonction angle-temps de manière à obtenir un signal d'accélération angulaire instantanée,
  - filtrer ledit signal d'accélération angulaire instantanée sur une bande fréquentielle prédéterminée.

13. Procédé de surveillance selon l'une des revendications 10 à 12, **caractérisé en ce que** l'étape a) et l'étape b) comportent une étape consistant à mesurer les intervalles de temps entre un premier front montant et un deuxième front montant par l'intermédiaire d'un second compteur haute fréquence, le deuxième front montant étant séparé du premier front montant par au moins un front montant intermédiaire, le second compteur étant de préférence relié à l'horloge haute fréquence du premier compteur.

14. Système de surveillance d'un élément tournant appartenant à une transmission mécanique d'un aérogénérateur, le système de surveillance étant **caractérisé en ce qu'**il comporte :

   - des moyens de détermination agencés pour déterminer un signal représentatif de la vitesse angulaire instantanée ($\omega$) de l'élément tournant sur une durée d'acquisition,
   - des moyens d'échantillonnage configurés pour échantillonner le signal représentatif de la vitesse angulaire (w) à un pas angulaire constant sur un nombre d'échantillons déterminé,
   - des moyens de calcul configurés pour calculer la transformée de Fourier discrète du signal représentatif de la vitesse angulaire échantillonné ($\omega(i)$) de manière à obtenir un spectre d'ordre du signal représentatif de la vitesse angulaire,
   - des moyens de détection agencés pour détecter la fréquence fondamentale d'apparition d'un défaut de l'élément tournant sur le spectre d'ordre du signal représentatif de la vitesse angulaire ($\omega(i)$).

15. Système de surveillance selon la revendication 14, **caractérisé en ce que** le spectre d'ordre du signal de vitesse angulaire présente une composante fréquentielle du type large bande, et **en ce que** les moyens de calcul sont configurés pour appliquer un fenêtrage (w(i)) au signal représentatif de la vitesse angulaire échantillonné ($\omega(i)$), le fenêtrage étant configuré pour retirer la composante fréquentielle du type large bande.

16. Système de surveillance selon la revendication 14 ou 15, **caractérisé en ce que** les moyens d'échantillonnage sont configurés pour :

   - calculer la valeur moyenne du signal représentatif de la vitesse angulaire instantanée ($\omega$) sur la durée d'acquisition,
   - compléter le signal représentatif de la vitesse angulaire instantanée ($\omega$) avec un nombre de points présentant chacun une valeur sensiblement égale à ladite valeur moyenne calculée, le nombre de points étant déterminé de sorte que le nombre d'échantillons définit un intervalle de temps multiple de la période fondamentale d'apparition du défaut.

17. Système de surveillance selon l'une des revendications 14 à 16, **caractérisé en ce qu'**il comporte en outre :

   - des moyens de mesure de la valeur moyenne d'un signal de vitesse angulaire instantanée ($\omega$) sur la durée d'acquisition,
   - des moyens de mesure de la valeur moyenne du couple exercé sur l'élément tournant sur la durée d'acquisition,
   - des moyens de normalisation du signal représentatif de la vitesse angulaire instantanée ($\omega$) relativement à un signal représentatif de la vitesse angulaire de référence.

18. Système de surveillance selon l'une des revendications 14 à 17, **caractérisé en ce qu'**il comporte en outre :

   - des moyens de mesure de la valeur moyenne d'un signal de vitesse angulaire instantanée ($\omega$) sur la durée d'acquisition,
   - des moyens de mesure de la valeur moyenne du couple exercé sur l'élément tournant sur la durée d'acquisition,
   - des moyens pour attribuer au moins un indicateur à la fréquence fondamentale d'apparition détectée sur la durée d'acquisition, l'indicateur correspondant de préférence à l'amplitude du spectre d'ordre pour la fréquence fondamentale d'apparition ou à une combinaison linéaire des amplitudes dudit spectre d'ordre pour les harmoniques de la fréquence fondamentale d'apparition,
   - des moyens de normalisation des indicateurs obtenus sur la durée d'acquisition relativement à un indicateur de référence.

19. Système de surveillance selon l'une des revendications 14 à 18, **caractérisé en ce que** le signal représentatif de la vitesse angulaire instantanée ($\omega$) présente une fréquence maximale,
   **en ce que** les moyens d'échantillonnage sont configurés pour choisir une fréquence d'échantillonnage inférieure au double de ladite fréquence maximale, et en ce les moyens de détection sont configurés pour détecter la fréquence d'ordre fondamentale d'apparition du défaut de l'élément tournant sur une zone de repliement du spectre d'ordre du signal représentatif de la vitesse angulaire.

20. Système de surveillance selon l'une des revendications 11 à 14, **caractérisé en ce que** les moyens de détermination comportent :

- un tachymètre monté sur l'élément tournant, le tachymètre délivrant une série d'impulsions représentative de la position angulaire instantanée de l'élément tournant,

- un premier compteur haute fréquence agencé pour mesurer les intervalles de temps entre deux fronts montants, notamment successifs, de la série d'impulsions, le premier compteur formant les moyens d'échantillonnage, le premier compteur présentant une horloge haute fréquence.

21. Système de surveillance selon la revendication 20, **caractérisé en ce que** les moyens de calcul sont configurés pour soustraire deux intervalles de temps successifs mesurés entre deux fronts montants sur la durée d'acquisition de manière à obtenir un signal représentatif de l'accélération angulaire instantanée.

22. Système de surveillance selon la revendication 20, **caractérisé en ce que** les moyens de calcul sont configurés pour :

- sommer les intervalles de temps mesurés entre deux fronts montants sur la durée d'acquisition de manière à obtenir un signal dit signal somme,
- interpoler le signal somme, de préférence par interpolation spline cubique, de manière à obtenir une fonction angle-temps, la fonction angle-temps associant chaque position angulaire instantanée de l'élément tournant à un pas de temps, les pas de temps correspondant aux franchissements de chaque front montant sur la durée d'acquisition,
- échantillonner ladite position angulaire à pas de temps constant,
- effectuer une double dérivation temporelle de la fonction angle-temps de manière à obtenir un signal d'accélération angulaire instantanée,
- filtrer ledit signal d'accélération angulaire instantanée sur une bande fréquentielle prédéterminée.

23. Système de surveillance selon l'une des revendications 20 à 22, **caractérisé en ce que** les moyens de détermination comportent un second compteur haute fréquence agencé pour mesurer les intervalles de temps entre un premier front montant et un deuxième front montant, le deuxième front montant étant séparé du premier front montant par au moins un front montant intermédiaire, le second compteur étant de préférence relié à l'horloge haute fréquence du premier compteur.

24. Système de surveillance selon l'une des revendications 14 à 19, **caractérisé en ce que** l'élément tournant présente un carter, et **en ce que** les moyens de détermination comportent au moins un accéléromètre monté sur le carter.

**Patentansprüche**

1. Verfahren zur Überwachung eines drehenden Elements, das zu einem mechanischen Getriebe eines Windgenerators gehört, wobei das Verfahren **dadurch gekennzeichnet ist, dass** es die Schritte umfasst, die aus Folgendem bestehen:

- a) Bestimmen eines Signals, das die augenblickliche Winkelgeschwindigkeit ($\omega$) des drehenden Elements darstellt, das sich während einer Erfassungsdauer dreht,
- b) Abtasten des Signals, das die augenblickliche Winkelgeschwindigkeit ($\omega$) mit einem konstanten Winkelschritt darstellt, auf einer bestimmten Anzahl von Proben,
- c) Berechnen der diskreten Fouriertransformation des Signals, das die Winkelgeschwindigkeit ($\omega(i)$) abgetastet bei Schritt b), darstellt, um ein Ordnungsspektrum des Signals zu erhalten, das die Winkelgeschwindigkeit darstellt,
- d) Nachweisen der grundlegenden Frequenz des Auftretens eines Defekts des drehenden Elements im Ordnungsspektrum des Signals, das die Winkelgeschwindigkeit darstellt.

2. Verfahren zur Überwachung nach Anspruch 1, **dadurch gekennzeichnet, dass** das Ordnungsspektrum des Signals der Winkelgeschwindigkeit eine frequentielle Komponente vom Typ Breitband aufweist, und dadurch, dass die Berechnungsmittel konfiguriert sind, um auf das Signal, das die abgetastete Winkelgeschwindigkeit ($\omega(i)$) darstellt, eine Fensterbildung ($\omega(i)$) anzuwenden, wobei die Fensterbildung konfiguriert ist, um die frequentielle Komponente vom Typ Breitband zurückzuziehen.

3. Verfahren zur Überwachung nach Anspruch 1 oder 2, **dadurch gekennzeichnet, dass** der Schritt b) die Schritte umfasst, die aus Folgendem bestehen:

- Berechnen des mittleren Werts des Signals, das die augenblickliche Winkelgeschwindigkeit ($\omega$) darstellt, das bei Schritt a) für die Erfassungsdauer bestimmt wird,
- Vervollständigen des Signals, das die augenblickliche Winkelgeschwindigkeit ($\omega$) darstellt, das bei Schritt a) mit einer Anzahl von Punkten bestimmt wird, die jeweils einen Wert darstellen, der im Wesentlichen gleich dem berechneten mittleren Wert des Signals ist, das die augenblickliche Winkelgeschwindigkeit ($\omega$) darstellt, wobei die Anzahl der Punkte derart bestimmt wird, dass die Anzahl der Proben ein Zeitintervall definiert, das ein Vielfaches des grundlegenden Zeitraums des Auftretens des Defekts ist.

4. Verfahren zur Überwachung nach einem der Ansprüche 1 bis 3, **dadurch gekennzeichnet, dass** es außerdem die Schritte umfasst, die aus Folgendem bestehen:

- Messen des mittleren Werts eines Signals der augenblicklichen Winkelgeschwindigkeit ($\omega$) für die Erfassungsdauer,
- Messen des mittleren Werts des Drehmoments, das auf das drehende Element für die Erfassungsdauer ausgeübt wird,
- Normalisieren des Signals, das die augenblickliche Winkelgeschwindigkeit ($\omega$) darstellt, bestimmt bei Schritt a), mit Bezug auf ein Signal, das die Referenz-Winkelgeschwindigkeit darstellt.

5. Verfahren zur Überwachung nach einem der Ansprüche 1 bis 3, **dadurch gekennzeichnet, dass** es außerdem die Schritte umfasst, die aus Folgendem bestehen:

- Messen des mittleren Werts des Drehmoments, das für die Erfassungsdauer ausgeübt wird,
- Zuweisen mindestens einer Anzeige zur grundlegenden Frequenz des Auftretens, nachgewiesen bei Schritt d) für die Erfassungsdauer, wobei die Anzeige vorzugsweise der Amplitude des Ordnungsspektrums, erhaltenen bei Schritt c) für die grundlegende Frequenz des Auftretens oder einer linearen Kombination der Amplituden des Ordnungsspektrums für die Harmonischen der grundlegenden Frequenz des Auftretens entspricht,
- Normalisieren der Anzeigen, die für die Erfassungsdauer erhalten werden, mit Bezug auf eine Referenzanzeige.

6. Verfahren zur Überwachung nach einem der Ansprüche 1 bis 5, **dadurch gekennzeichnet, dass** das Signal, das die augenblickliche Winkelgeschwindigkeit ($\omega$) darstellt, bestimmt bei Schritt a), eine maximale Frequenz aufweist, dadurch, dass der Schritt b) einen Schritt umfasst, der darin besteht, eine Abtast-Frequenz zu wählen, die kleiner als das Doppelte der maximalen Frequenz ist, und dadurch, dass der Schritt d) einen Schritt umfasst, der darin besteht, die grundlegende Ordnungsfrequenz des Auftretens eines Defekts des drehenden Elements auf einem Aliasingsbereich des Ordnungsspektrums des Signals, das die Winkelgeschwindigkeit, erhalten bei Schritt c) darstellt, nachzuweisen.

7. Verfahren zur Überwachung nach einem der Ansprüche 1 bis 6, **dadurch gekennzeichnet, dass** das Signal, das die augenblickliche Winkelgeschwindigkeit ($\omega$) darstellt, bestimmt bei Schritt a), ein Beschleunigungssignal ist, abgetastet mit konstantem Zeitschritt, wobei Schritt a) einen Schritt umfasst, der darin besteht, einen Beschleunigungsmesser auf einem Gehäuse des drehenden Elements zu montieren.

8. Verfahren zur Überwachung nach Anspruch 7, **dadurch gekennzeichnet, dass** Schritt b) einen Schritt umfasst, der darin besteht, das Beschleunigungssignal zu interpolieren.

9. Verfahren zur Überwachung nach einem der Ansprüche 1 bis 6, **dadurch gekennzeichnet, dass** das Signal, das die augenblickliche Winkelgeschwindigkeit ($\omega$) darstellt, bestimmt bei Schritt a), ein Signal der augenblicklichen Winkelgeschwindigkeit ($\omega$) ist.

10. Verfahren nach Anspruch 9, **dadurch gekennzeichnet, dass** der Schritt a) und der Schritt b) Schritte umfassen, die darin bestehen:

- einen Tachometer auf dem drehenden Element zu montieren, wobei der Tachometer einer Reihe vom Impulsen liefert, die die augenblickliche Winkelposition ($\omega$) des drehenden Elements darstellen,
- die Zeitintervalle zwischen zwei Aufstiegsflanken, insbesondere aufeinander folgend, der Reihe von Impulsen mit Hilfe eines ersten Hochfrequenzzählers zu messen, der eine Hochfrequenzuhr aufweist.

11. Verfahren zur Überwachung nach Anspruch 10, **dadurch gekennzeichnet, dass** es einen Schritt umfasst, der darin besteht, zwei aufeinander folgende Zeitintervalle, gemessen zwischen zwei Aufstiegsflanken für die Erfassungsdauer zu subtrahieren, um ein Signal zu erhalten, das die augenblickliche Winkelbeschleunigung darstellt.

12. Verfahren zur Überwachung nach Anspruch 10, **dadurch gekennzeichnet, dass** es die Schritte umfasst, die aus Folgendem bestehen:

- Summieren der Zeitintervalle, gemessen zwischen zwei Aufstiegsflanken für die Erfassungsdauer, um ein Signal, genannt Summensignal, zu erhalten,
- Interpolieren des Summensignals, vorzugsweise durch kubische Spline-Interpolation, um eine Winkel-Zeit-Funktion zu erhalten, wobei die Winkel-Zeit-Funktion jede augenblickliche Winkelposition des drehenden Elements mit einem Zeitschritt assoziiert, wobei der Zeitschritte den Überschreitungen jeder Aufstiegsflanke für die Erfassungsdauer entsprechen,

- Abtasten der Winkelposition mit konstantem Zeitschritt

- Durchführen einer doppelten zeitlichen Ableitung der Winkel-Zeit-Funktion, um ein augenblickliches Winkelbeschleunigungssignal zu erhalten,

- Filtern des augenblicklichen Winkelbeschleunigungssignals auf einem vorbestimmten Frequenzband.

**13.** Verfahren zur Überwachung nach einem der Ansprüche 10 bis 12, **dadurch gekennzeichnet, dass** der Schritt a) und der Schritt b) einen Schritt umfassen, der darin besteht, die Zeitintervalle zwischen einer ersten Aufstiegsflanke und einer zweiten Aufstiegsflanke mit Hilfe eines zweiten Hochfrequenzzählers zu messen, wobei die zweite Aufstiegsflanke von der ersten Aufstiegsflanke durch mindestens eine Zwischen-Aufstiegsflanke getrennt ist, wobei der zweite Zähler vorzugsweise mit der Hochfrequenzuhr des ersten Zählers verbunden ist.

**14.** System zur Überwachung eines drehenden Elements, das zu einem mechanischen Getriebe eines Windgenerators gehört, wobei das System zur Überwachung **dadurch gekennzeichnet ist, dass** es Folgendes umfasst:

- Bestimmungsmittel, die angeordnet sind, um ein Signal zu bestimmen, das die augenblickliche Winkelgeschwindigkeit ($\omega$) des drehenden Elements für eine Erfassungsdauer darstellt,

- Abtastmittel, die konfiguriert sind, um das Signals, das die Winkelgeschwindigkeit ($\omega$) darstellt, mit einem konstanten Winkelschritt auf einer bestimmten Anzahl von Proben abzutasten,

- Berechnungsmittel, die konfiguriert sind, um die diskrete Fouriertransformation des Signals, das die abgetastete Winkelgeschwindigkeit ($\omega(i)$) darstellt, zu berechnen, um ein Ordnungsspektrum des Signals zu erhalten, das die Winkelgeschwindigkeit darstellt,

- Nachweismittel, die angeordnet sind, um die grundlegende Frequenz des Auftretens eines Defekts des drehenden Elements im Ordnungsspektrum des Signals, das die Winkelgeschwindigkeit ($\omega(i)$) darstellt, nachzuweisen.

**15.** System nach Anspruch 14, **dadurch gekennzeichnet, dass** das Ordnungsspektrum des Signals der Winkelgeschwindigkeit eine frequentielle Komponente vom Typ Breitband aufweist, und dadurch, dass die Berechnungsmittel konfiguriert sind, um auf das Signal, das die abgetastete Winkelgeschwindigkeit ($\omega(i)$) darstellt, eine Fensterbildung ($\omega(i)$) anzuwenden, wobei die Fensterbildung konfiguriert ist, um die frequentielle Komponente vom Typ Breitband zurückzuziehen.

**16.** System zur Überwachung nach Anspruch 14 oder 15, **dadurch gekennzeichnet, dass** die Abtastmittel konfiguriert sind, um:

- den mittleren Wert des Signals, das die augenblickliche Winkelgeschwindigkeit ($\omega$) darstellt, für die Erfassungsdauer zu berechnen,

- das Signal, das die augenblickliche Winkelgeschwindigkeit ($\omega$) darstellt, mit einer Anzahl von Punkten zu vervollständigen, die jeweils einen Wert darstellen, der im Wesentlichen gleich dem berechneten mittleren Wert ist, wobei die Anzahl der Punkte derart bestimmt wird, dass die Anzahl der Proben ein Zeitintervall definiert, das ein Vielfaches des grundlegenden Zeitraums des Auftretens des Defekts ist.

**17.** System zur Überwachung nach einem der Ansprüche 14 bis 16, **dadurch gekennzeichnet, dass** es außerdem Folgendes umfasst:

- Mittel zum Messen des mittleren Werts eines Signals der augenblicklichen Winkelgeschwindigkeit ($\omega$) für die Erfassungsdauer,

- Mittel zum Messen des mittleren Werts des Drehmoments, das auf das drehende Element für die Erfassungsdauer ausgeübt wird,

- Mittel zur Normalisierung des Signals, das die augenblickliche Winkelgeschwindigkeit ($\omega$) darstellt, mit Bezug auf ein Signal, das die Referenz-Winkelgeschwindigkeit darstellt.

**18.** System zur Überwachung nach einem der Ansprüche 14 bis 17, **dadurch gekennzeichnet, dass** es außerdem Folgendes umfasst:

- Mittel zum Messen des mittleren Werts eines Signals der augenblicklichen Winkelgeschwindigkeit ($\omega$) für die Erfassungsdauer,

- Mittel zum Messen des mittleren Werts des Drehmoments, das auf das drehende Element für die Erfassungsdauer ausgeübt wird,

- Mittel, um mindestens einer Anzeige der grundlegenden Frequenz des Auftretens zuzuweisen, die für die Erfassungsdauer nachgewiesen wurde, wobei die Anzeige vorzugsweise der Amplitude des Ordnungsspektrums für die grundlegende Frequenz des Auftretens oder einer linearen Kombination der Amplituden des Ordnungsspektrums für die Harmonischen der grundlegenden Frequenz des Auftretens entspricht,

- Mittel zur Normalisierung der Anzeigen, die für die Erfassungsdauer erhalten werden, mit Bezug auf eine Referenzanzeige.

**19.** System zur Überwachung nach einem der Ansprüche 14 bis 18, **dadurch gekennzeichnet, dass** das Signal, das die augenblickliche Winkelgeschwindigkeit ($\omega$) darstellt, eine maximale Frequenz aufweist, dadurch, dass die Abtastmittel konfiguriert sind, um eine Abtast-Frequenz zu wählen, die kleiner als das Doppelte der maximalen Frequenz ist, und dadurch, dass die Nachweismittel konfiguriert sind, um die grundlegende Ordnungsfrequenz des Auftretens des Defekts des drehenden Elements in einem Aliasingsbereich des Ordnungsspektrums des Signals, das die Winkelgeschwindigkeit darstellt, nachzuweisen.

**20.** System zur Überwachung nach einem der Ansprüche 11 bis 14, **dadurch gekennzeichnet, dass** die Nachweismittel Folgendes umfassen:

- einen Tachometer, der auf dem drehenden Element montiert ist, wobei der Tachometer einer Reihe von Impulsen liefert, die die augenblickliche Winkelposition des drehenden Elements darstellen,
- einen ersten Hochfrequenzzähler, der angeordnet ist, um die Zeitintervalle zwischen zwei Aufstiegsflanken, insbesondere aufeinander folgend, der Reihe von Impulsen zu messen, wobei der erste Zähler die Abtastmittel bildet, wobei der erste Zähler eine Hochfrequenzuhr aufweist.

**21.** System zur Überwachung nach Anspruch 20, **dadurch gekennzeichnet, dass** die Berechnungsmittel konfiguriert sind, um zwei aufeinander folgende Zeitintervalle, gemessen zwischen zwei Aufstiegsflanken für die Erfassungsdauer zu subtrahieren, um ein Signal zu erhalten, das die augenblickliche Winkelbeschleunigung darstellt.

**22.** System zur Überwachung nach Anspruch 20, **dadurch gekennzeichnet, dass** die Berechnungsmittel konfiguriert sind, um:

- die Zeitintervalle, die zwischen zwei Aufstiegsflanken für die der Erfassungsdauer gemessen werden, zu summieren, um ein Signal, genannt Summensignal, zu erhalten,
- das Summensignal, vorzugsweise durch kubische Spline-Interpolation, zu interpolieren, um eine Winkel-Zeit-Funktion zu erhalten, wobei die Winkel-Zeit-Funktion jede augenblickliche Winkelposition des drehenden Elements mit einem Zeitschritt assoziiert, wobei die Zeitschritte den Überschreitungen jeder Aufstiegsflanke für die Erfassungsdauer entsprechen,
- die Winkelposition mit konstantem Zeitschritt abzutasten
- eine doppelte zeitlichen Ableitung der Winkel-Zeit-Funktion durchzuführen, um ein augenblickliches Winkelbeschleunigungssignal zu erhalten,
- des augenblickliche Winkelbeschleunigungssignal auf einem vorbestimmten Frequenzband zu filtern.

**23.** System zur Überwachung nach einem der Ansprüche 20 bis 22, **dadurch gekennzeichnet, dass** die Bestimmungsmittel einen zweiten Hochfrequenzzähler umfassen, der angeordnet ist, um die Zeitintervalle zwischen einer ersten Aufstiegsflanke und einer zweiten Aufstiegsflanke zu messen, wobei die zweite Aufstiegsflanke von der ersten Aufstiegsflanke durch mindestens eine Zwischen-Aufstiegsflanke getrennt ist, wobei der zweite Zähler vorzugsweise mit der Hochfrequenzuhr des ersten Zählers verbunden ist.

**24.** System zur Überwachung nach einem der Ansprüche 14 bis 19, **dadurch gekennzeichnet, dass** das drehende Element ein Gehäuse aufweist, und dadurch, dass die Bestimmungsmittel mindestens einen Beschleunigungsmesser aufweisen, der auf dem Gehäuse montiert ist.

**Claims**

**1.** A method for monitoring a rotating element belonging to a mechanical transmission of a wind turbine, the method being **characterized in that** it comprises the steps of:

- a) determining a signal representative of the instantaneous angular velocity ($\omega$) of the rotating element over an acquisition duration,
- b) sampling the signal representative of the instantaneous angular velocity ($\omega$) with a constant angular pitch over a determined number of samples,
- c) calculating the discrete Fourier transform of the signal representative of the angular velocity sampled ($\omega(i)$) during the step b) so as to obtain an order spectrum of the signal representative of the angular velocity,
- d) detecting the fundamental frequency of appearance of a defect of the rotating element on the order spectrum of the signal representative of the angular velocity.

**2.** The monitoring method as claimed in claim 1, **characterized in that** the order spectrum of the angular velocity signal exhibits a frequency component of the wideband type, and **in that** the computation means are configured to apply a windowing ($w(i)$) to the signal representative of the angular velocity sampled ($\omega(i)$), the windowing being configured to remove the frequency component of the wideband type.

3. The monitoring method as claimed in claim 1 or 2, **characterized in that** the step b) comprises the steps of:

- calculating the average value of the signal representative of the instantaneous angular velocity (ω) determined during the step a) over the acquisition duration,
- complementing the signal representative of the instantaneous angular velocity (ω) determined during the step a) with a number of points each having a value substantially equal to said calculated average value of the signal representative of the instantaneous angular velocity (ω), the number of points being determined so that the number of samples defines a time interval which is a multiple of the fundamental period of appearance of the defect.

4. The monitoring method as claimed in one of claims 1 to 3, **characterized in that** it also comprises the steps of:

- measuring the average value of an instantaneous angular velocity signal (ω) over the acquisition duration,
- measuring the average value of the torque exerted on the rotating element over the acquisition duration,
- normalizing the signal representative of the instantaneous angular velocity (ω) determined during the step a) relative to a signal representative of the reference angular velocity.

5. The monitoring method as claimed in one of claims 1 to 3, **characterized in that** it also comprises the steps of:

- measuring the average value of the torque exerted over the acquisition duration,
- assigning at least one indicator to the fundamental frequency of appearance detected during the step d) over the acquisition duration, the indicator preferably corresponding to the amplitude of the order spectrum obtained during the step c) for the fundamental frequency of appearance or to a linear combination of the amplitudes of said order spectrum for the harmonics of the fundamental frequency of appearance,
- normalizing the indicators obtained over the acquisition duration relative to a reference indicator.

6. The monitoring method as claimed in one of claims 1 to 5, **characterized in that** the signal representative of the instantaneous angular velocity (ω) determined during the step a) has a maximum frequency, **in that** the step b) comprises a step of choosing a sampling frequency which is less than twice said maximum frequency, and **in that** the step d) comprises a step of detecting the fundamental order frequency of appearance of a defect of the rotating element over an aliasing area of the order spectrum of the signal representative of the angular velocity obtained during the step c).

7. The monitoring method as claimed in one of claims 1 to 6, **characterized in that** the signal representative of the instantaneous angular velocity (ω) determined during the step a) is an accelerometric signal sampled with a constant time step, the step a) comprising a step of mounting an accelerometer on a casing of the rotating element.

8. The monitoring method as claimed in claim 7, **characterized in that** the step b) comprises a step of interpolating the accelerometric signal.

9. The monitoring method as claimed in one of claims 1 to 6, **characterized in that** the signal representative of the instantaneous angular velocity (ω) determined during the step a) is an instantaneous angular velocity signal (ω).

10. The monitoring method as claimed in claim 9, **characterized in that** the step a) and the step b) comprise the steps of:

- mounting a tachometer on the rotating element, the tachometer delivering a series of pulses representative of the instantaneous angular position (ω) of the rotating element,
- measuring the time intervals between two rising edges, notably successive, of the series of pulses via a first high-frequency counter having a high-frequency clock.

11. The monitoring method as claimed in claim 10, **characterized in that** it comprises a step of subtracting two successive time intervals measured between two rising edges over the acquisition duration so as to obtain a signal representative of the instantaneous angular acceleration.

12. The monitoring method as claimed in claim 10, **characterized in that** it comprises the steps of:

- summing the time intervals measured between two rising edges over the acquisition duration so as to obtain a signal called sum signal,
- interpolating the sum signal, preferably by cubic spline interpolation, so as to obtain an angle-time function, the angle-time function associating each instantaneous angular position of the rotating element with a time step, the time steps corresponding to the crossings of each rising edge over the acquisition duration,
- sampling said angular position with constant time step,
- performing a double time derivation of the angle-time function so as to obtain an instantaneous angular acceleration signal,
- filtering said instantaneous angular acceleration signal over a predetermined frequency band.

13. The monitoring method as claimed in one of claims 10 to 12, **characterized in that** the step a) and the step b) comprise a step of measuring the time intervals between a first rising edge and a second rising edge via a second high-frequency counter, the second rising edge being separated from the first rising edge by at least one intermediate rising edge, the second counter preferably being linked to the high-frequency clock of the first counter.

14. A system for monitoring a rotating element belonging to a mechanical transmission of a wind turbine, the monitoring system being **characterized in that** it comprises:

    - determination means arranged to determine a signal representative of the instantaneous angular velocity ($\omega$) of the rotating element over an acquisition duration,
    - sampling means configured to sample the signal representative of the angular velocity ($\omega$) with a constant angular pitch over a determined number of samples,
    - computation means configured to calculate the discrete Fourier transform of the signal representative of the angular velocity sampled ($\omega(i)$) so as to obtain an order spectrum of the signal representative of the angular velocity,
    - detection means arranged to detect the fundamental frequency of appearance of a defect of the rotating element on the order spectrum of the signal representative of the angular velocity ($\omega(i)$).

15. The monitoring system as claimed in claim 14, **characterized in that** the order spectrum of the angular velocity signal exhibits a frequency component of the wideband type, and **in that** the computation means are configured to apply a windowing ($w(i)$) to the signal representative of the angular velocity sampled ($\omega(i)$), the windowing being configured to remove the frequency component of the wideband type.

16. The monitoring system as claimed in claim 14 or 15, **characterized in that** the sampling means are configured to:

    - calculate the average value of the signal representative of the instantaneous angular velocity ($\omega$) over the acquisition duration,
    - complement the signal representative of the instantaneous angular velocity ($\omega$) with a number of points each having a value substantially equal to said calculated average value, the number of points being determined so that the number of samples defines a time interval that is a multiple of the fundamental period of appearance of the defect.

17. The monitoring system as claimed in one of claims 14 to 16, **characterized in that** it also comprises:

    - means for measuring the average value of an instantaneous angular velocity signal ($\omega$) over the acquisition duration,
    - means for measuring the average value of the torque exerted on the rotating element over the acquisition duration,
    - means for normalizing the signal representative of the instantaneous angular velocity ($\omega$) relative to a signal representative of the reference angular velocity.

18. The monitoring system as claimed in one of claims 14 to 17, **characterized in that** it also comprises:

    - means for measuring the average value of an instantaneous angular velocity ($\omega$) over the acquisition duration,
    - means for measuring the average value of the torque exerted on the rotating element over the acquisition duration,
    - means for assigning at least one indicator to the fundamental frequency of appearance detected over the acquisition duration, the indicator preferably corresponding to the amplitude of the order spectrum for the fundamental frequency of appearance or to a linear combination of the amplitudes of said order spectrum for the harmonics of the fundamental frequency of appearance,
    - means for normalizing the indicators obtained over the acquisition duration relative to a reference indicator.

19. The monitoring system as claimed in one of claims 14 to 18, **characterized in that** the signal representative of the instantaneous angular velocity ($\omega$) has a maximum frequency,
    **in that** the sampling means are configured to choose a sampling frequency less than twice said maximum frequency,

and **in that** the detection means are configured to detect the fundamental order frequency of appearance of the defect of the rotating element over an aliasing area of the order spectrum of the signal representative of the angular velocity.

20. The monitoring system as claimed in one of claims 11 to 14, **characterized in that** the determination means comprise:

    - a tachometer mounted on the rotating element, the tachometer delivering a series of pulses representative of the instantaneous angular position of the rotating element,

    - a first high-frequency counter arranged to measure the time intervals between two rising edges, notably successive, of the series of pulses, the first counter forming the sampling means, the first counter having a high-frequency clock.

21. The monoitoring system as claimed in claim 20, **characterized in that** the computation means are configured to subtract two successive time intervals measured between two rising edges over the acquisition duration so as to obtain a signal representative of the instantaneous angular acceleration.

22. The monitoring system as claimed in claim 20, **characterized in that** the computation means are configured to:

    - sum the time intervals measured between two rising edges over the acquisition duration so as to obtain a signal called sum signal,

    - interpolate the sum signal, preferably by cubic spline interpolation, so as to obtain an angle-time function, the angle-time function associating each instantaneous angular position of the rotating element with a time step, the time steps corresponding to the crossings of each rising edge over the acquisition duration,

    - sampling said angular position with constant time step,

    - performing a double time derivation of the angle-time function so as to obtain an instantaneous angular acceleration signal,

    - filtering said instantaneous angular acceleration signal over a predetermined frequency band.

23. The monitoring system as claimed in one of claims 20 to 22, **characterized in that** the determination means comprise a second high-frequency counter arranged to measure the time intervals between a first rising edge and a second rising edge, the second rising edge being separated from the first rising edge by at least one intermediate rising edge, the second counter preferably being linked to the high-frequency clock of the first counter.

24. The monitoring system as claimed in one of claims 14 to 19, **characterized in that** the rotating element has a casing, and **in that** the determination means comprise at least one accelerometer mounted on the casing.

*Fig. 1*

*Fig. 2*

Fig. 3

Fig. 4

Fig. 5

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5365787 A

- WO 9605486 A